Europäisches Patentamt

European Patent Office

Office européen des brevets

(11) Publication number: **0 062 124**
**B1**

(12) EUROPEAN PATENT SPECIFICATION

(45) Date of publication of patent specification: **14.11.84**

(21) Application number: **81301532.8**

(22) Date of filing: **08.04.81**

(51) Int. Cl.³: **B 23 K 9/16**

(54) **Method of, and apparatus for, gas shielded arc welding with direct current non-consumable electrode.**

(43) Date of publication of application:
**13.10.82 Bulletin 82/41**

(45) Publication of the grant of the patent:
**14.11.84 Bulletin 84/46**

(84) Designated Contracting States:
**DE FR GB IT SE**

(56) References cited:
**GB-A-1 186 073**
**GB-A-2 037 639**
**US-A-2 505 054**

(73) Proprietor: **KOBE STEEL LIMITED**
**3-18 1-chome Wakinohama cho**
**Chuo-ku Kobe 651 (JP)**

(72) Inventor: **Ogata, Yohji**
**390-93, Watauchi**
**Fujisawa Kanagawa-ken (JP)**
Inventor: **Aida, Isao**
**306, 2-15-7, Fujigaoka**
**Fujisawa-shi Kanagawa-ken (JP)**
Inventor: **Murayama, Hirokazu**
**5-51, Ikeda-cho**
**Yokosuka Kanagawa-ken (JP)**
Inventor: **Shibuya, Kenjiro**
**2284, Kamitsuruma**
**Sagamihara-shi Kanagawa-ken (JP)**

(74) Representative: **Barnard, Eric Edward et al**
**BROOKES & MARTIN High Holborn House 52/54**
**High Holborn**
**London WC1V 6SE (GB)**

EP 0 062 124 B1

Courier Press, Leamington Spa, England.

## Description

### Field of the Invention

This invention relates in general to a method of, and an apparatus for, direct current non-consumable gas shielded arc welding.

### Description of Prior Art

Non-consumable electrode gas shielded arc welding or tungsten electrode inert gas arc welding (hereinafter referred to as "TIG welding" for brevity) is generally recommended as means for welding large structures but has following drawbacks:

(1) Upon raising the welding speed to a high level, incomplete fusion can occur between the base metal or workpiece and the deposited molten metal due to insufficient preheating of the base metal.

(2) A direct current TIG arc is susceptible to the influences of an ambient magnetic field caused by variations in magnetization and the shape of the workpiece. As a result, "magnetic blows" are often experienced and, especially when those blows are deflected toward a previously formed bead, they give rise to such problems as incomplete fusion owing to insufficient preheating of the base metal, undesirable reductions in welding speed and remelting of the bead. Particularly, in the latter case, the bead sometimes falls off during operations in a vertical position or in an overhead position.

In view of the above-mentioned drawbacks, a method has been proposed in Japanese patent application 133005/78, laid open to public inspection under No. 61384/78, which eliminates the drawbacks by counteractively utilizing the magnetic blow phenomenon. According to this method:

(A) A DC electrode is located between a non-consumable electrode and a base metal and between a filler material, usually a wire, and the base metal; and

(B) Current is supplied through the respective electrodes:—

(i) in inverse directions when the non-consumable electrode is in a preceding position with respect to the filler wire, and

(ii) in the same direction when the filler wire is in a preceding position with respect to the electrode; and

(C) The arc is directed forwardly in a path of progress or travel.

In the accompanying drawings,

Figure 1 is a schematic illustration of the known method of TIG horizontal arc welding; and

Figure 2 is a schematic illustration of the known method of TIG vertical arc welding.

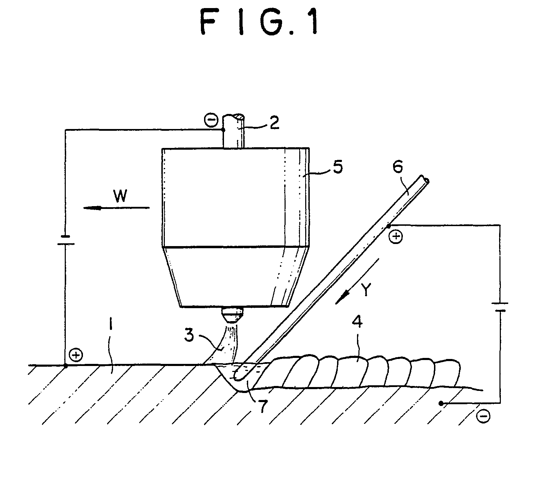

Figure 1 depicts a method utilizing the step (B) (i) and in which the welding operation proceeds in the direction indicated by arrow W. As shown, a shielding gas cup 5 and a tungsten electrode 2 are located forward of a filler metal wire 6 which is fed in the direction of arrow Y to follow the movement of the electrode 2 on the rear side thereof. In this figure, the reference numeral 3 denotes an arc, 4 a bonding bead, 7 a molten pool and 1 the base metal or workpiece. When the tungsten electrode 2 is supplied with a direct current of forward polarity as shown, the filler metal 6 constitutes an anode and the base metal 1 constitutes a cathode. With a direct current of inverse polarity, these roles are reversed. As a result, the electrode 2 and filler metal 6 then carry current of reversed polarity and the electromagnetic forceds produced by the magnetic fields of these currents act in opposition to one another according to Fleming's left-hand rule, so that the arc column is deflected in a direction away from the filler metal wire 6.

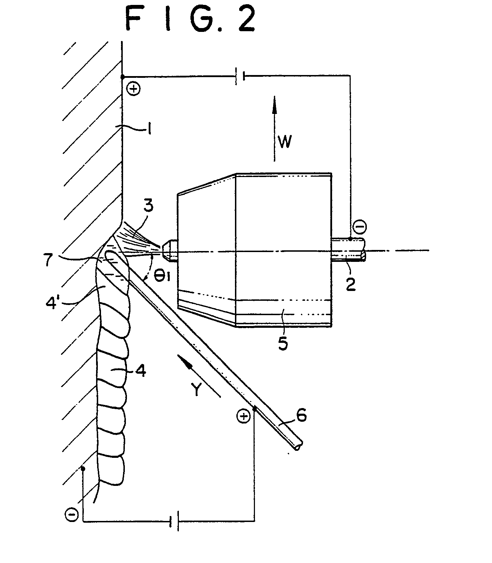

In an attempt to provide improved high speed direct current TIG welding utilizing the above-described method and involving "weaving" the arc along a path of travel, it has been further proposed in Japanese patent application No. 138004/78, preliminary published under No. 61383/80 to conduct a pulsated current through the filler metal 6. This proposal eliminates the above-mentioned drawbacks and has become to be applied more frequently to large structures. However, difficulties are still encountered in all position welding, especially, in vertical position welding as shown in Figure 2. Apart from the orientation, the method is substantially the same as Figure 1 except for the difference in the angle formed by the front face of the molten pool 7 and the base metal 1. The filler wire 6 must not contact the electrode 2 and the gas cup 5 and, even if not in physical contact, should not contaminate the electrode 2. Therefore, it is necessary to keep a suitable angular space $\theta_1$ between the filler wire 6 and the electrode 2. The filler wire 6 is dipped in the molten pool 7 as illustrated but, since the surface area of the molten pool 7 as seen from the feed direction of the filler wire 6 is very small in this vertical position and the freshest bead 4' immediately beneath the molten pool is still in semi-solidified or solidifying state, the filler wire 6 is apt to contact the bead 4' accidentally or to become caught on the bead 4'. These problems sometimes compel interruption of the welding operation and, if not, leave bruises and depressions on the bead surface and ultimately cause joint defects. These problems are not limited to operations in the vertical position as in Figure 2 but also occur where the filler wire 6 is fed in at a high feed rate. In general these problems have hindered wider application of the above-mentioned proposals.

US Patent Specifications nos. 3 122 629 and 3 549 856 additionally disclose consumable electrode gas shielded arc welding processes using separate power sources for the filler and the electrode. Further methods for electromagnetically controlling an arc in non-consumable electrode gas shielded arc welding are disclosed in US Patent Specification no. 3 163 743, UK Patent Publication no. 2 037 639, R & D Kobe Steel Engineering Reports Vol. 30, No. 2, April 1980, and materials of an International Conference of The Welding Institute in May 1979.

A general object of the present invention is to provide an improved method of, and apparatus for, welding.

The present invention provides in a first aspect a welding method in which a gas-shielded non-consumable electrode and a filler wire are respectively connected to independent DC power sources and the non-consumable electrode is located in a position forward of the filler wire relative to the direction of progress of welding, said non-consumable electrode, and the filler wire, carrying opposite electric currents, characterised in that said non-consumable electrode is held in a forwardly-tilted position forming an angle $(\theta_2) \leq 85°$ with a workpiece.

The present invention also provides a welding apparatus with an oscillating mechanism for the welding torch; said mechanism including a movable casing having means for holding a welding torch and movable reciprocally in a direction perpendicular to the axis of said welding torch, and a drive casing accommodating a drive mechanism and supporting said movable casing at a projected end of a slide shaft for movements toward and away from said drive casing, said means for holding said welding torch being mounted on a slide member loosely fitted on slide shafts extending in the axial direction of said welding torch, and said slide member being driven by a drive shaft assembly telescopically linked to the drive mechanism of said drive casing, wherein said slide shaft is moved by a rack and pinion, limit switches are fixedly mounted in said drive casing and serve to control the direction of rotation of said pinion thereby to limit the range of sliding movements of said slide shaft, strikers are supported on a screw rod in operative engagement with inverse screw threaded portions thereof and are movable during oscillation to operate said limit switches, said screw rod being adjustable from outside the casing via a splined joint provided in the casing to vary the stroke of the oscillating motion.

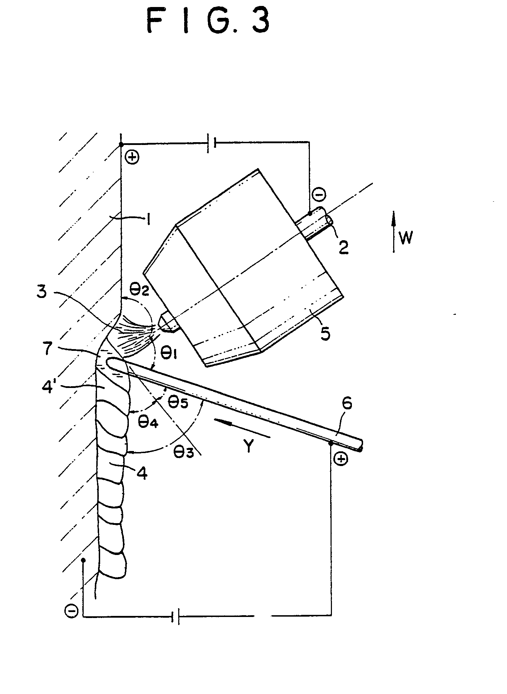

The present invention may become understood more readily and other objects and advantages of the present invention will become apparent from the following description and appended claims, taken in conjunction with Figures 3 to 17 of the accompanying drawings, wherein:

Figure 3 is a schematic illustration of a method according to the present invention;

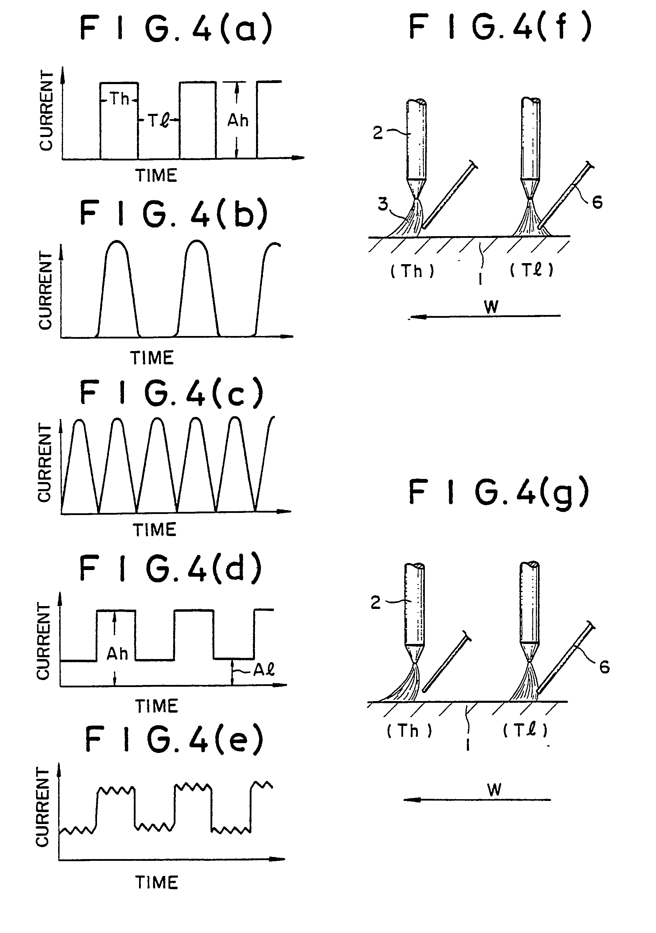

Figures 4(a) to 4(e) are diagrammatic views showing various waveforms of pulsated current for weaving an arc, and

Figures 4(f) and 4(g) illustrate respectively deflection states of arc corresponding to the wave forms shown in Figures 4(a) and 4(d);

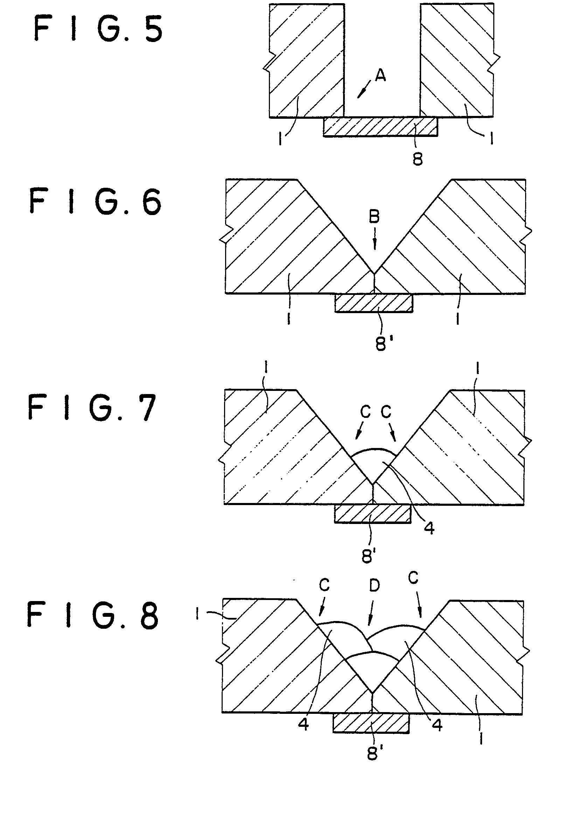

Figures 5 through 8 are diagrammatic cross-sectional views showing particular target portions of bevellings to which a welding arc is directed;

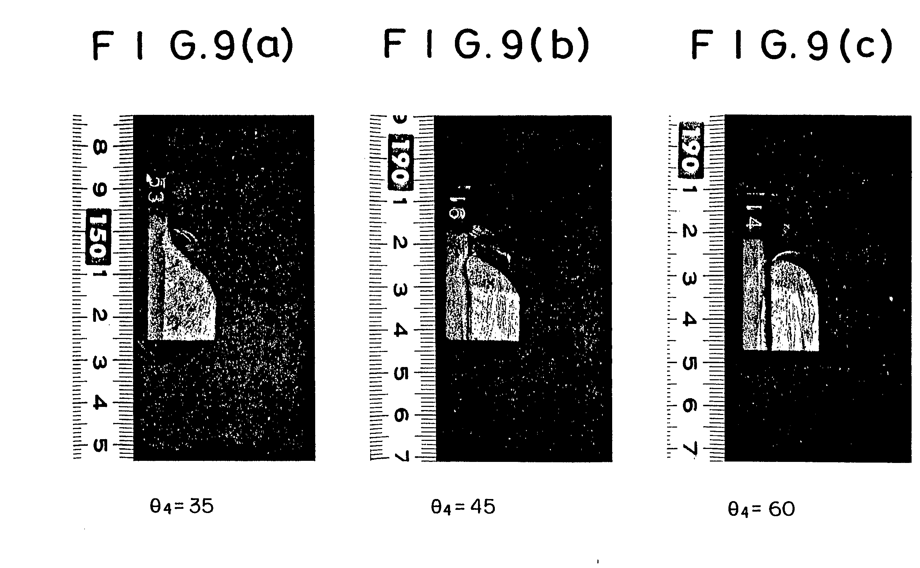

Figures 9(a) to 9(c) are photographs showing cross-sections of vertical welding beads formed according to the present invention;

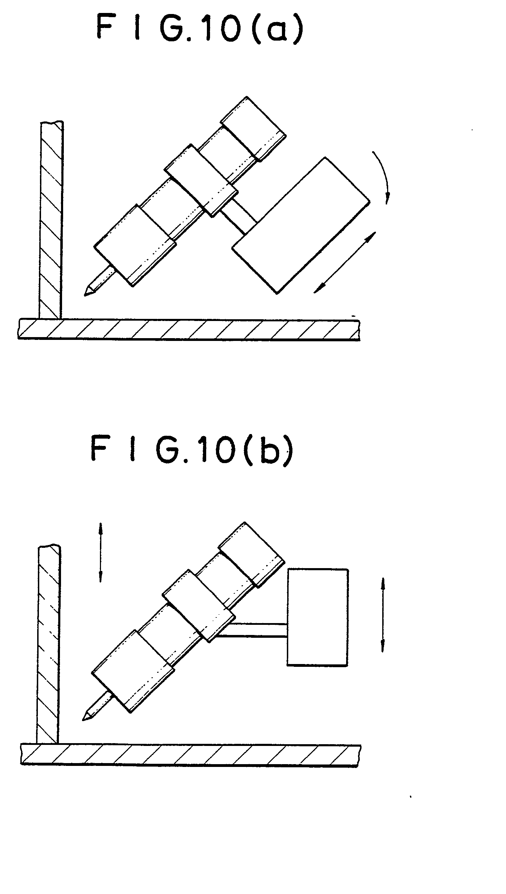

Figures 10(a) and 10(b) are schematic illustrations of an automatic arc voltage control mechanism of apparatus according to the present invention;

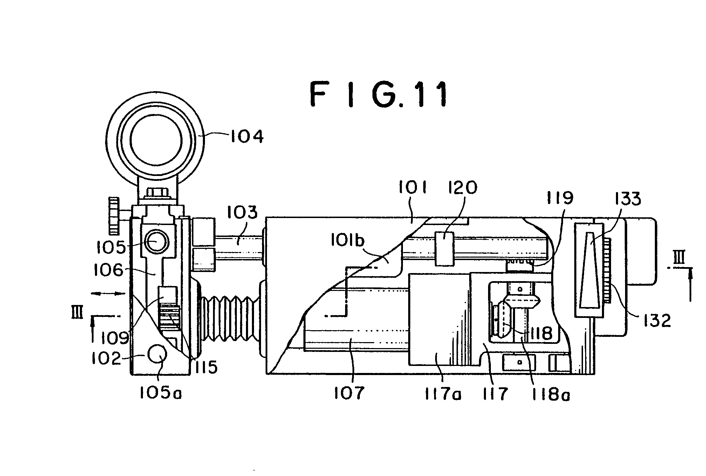

Figure 11 is a partly cutaway plan view of an arc oscillating mechanism of apparatus according to the present invention;

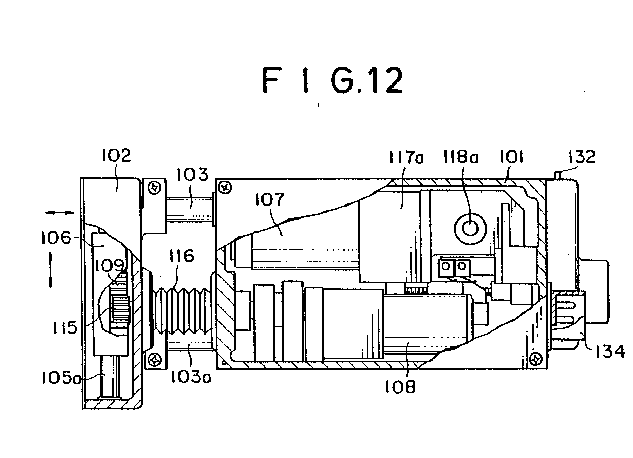

Figure 12 is a partly cutaway bottom view of the oscillating mechanism of Figure 11;

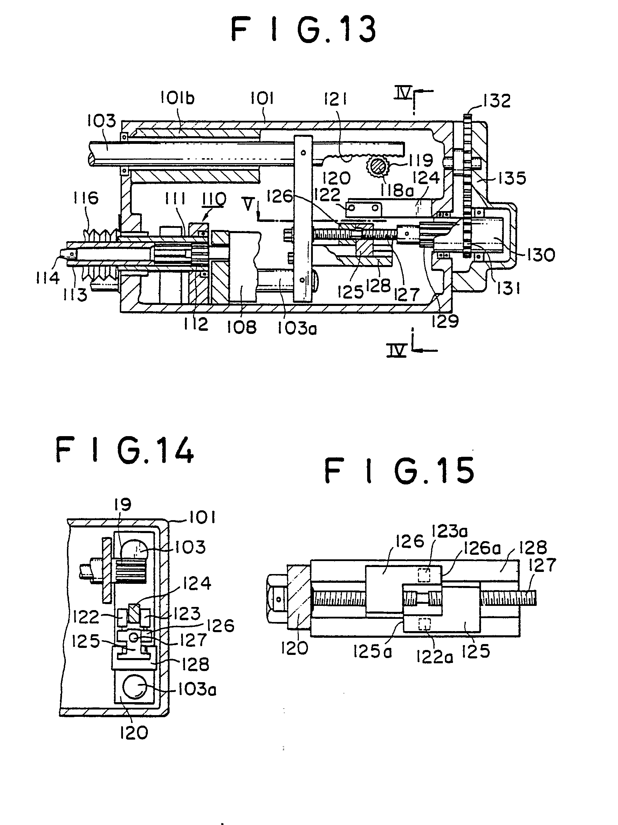

Figure 13 is a sectional view taken on line III—III of Figure 11;

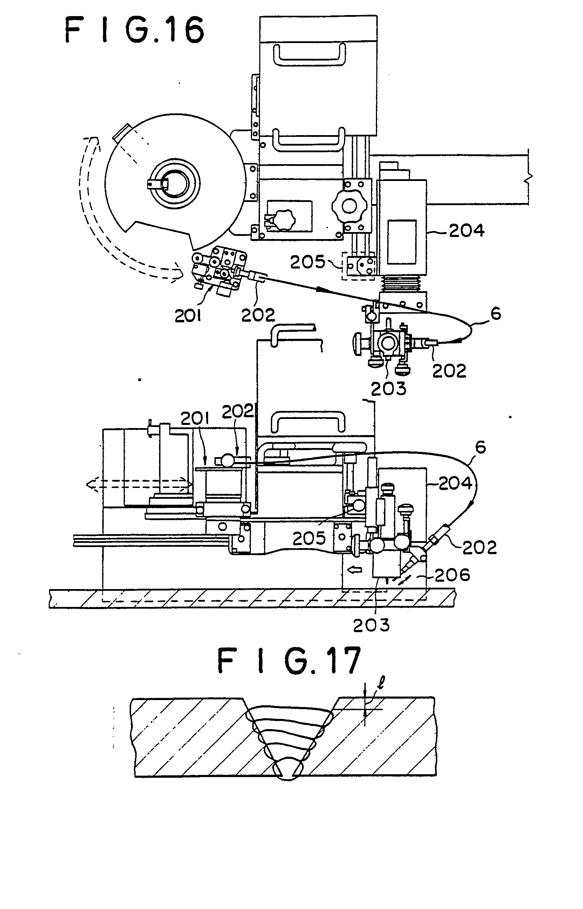

Figure 14 is a fragmentary sectional view taken on line IV—IV of Figure 13;

Figure 15 is a sectional view taken in the direction of arrowed line V—V in Figure 13;

Figure 16 is a schematic side elevation of an apparatus according to the invention; and

Figure 17 is a diagrammatic cross-section showing the overlaying conditions of a weld.

Referring to Figure 3 which illustrates a vertical upward welding operation according to an embodiment the present invention, an electrode 2 and a shielding gas cup 5 are held in a forwardly tilted posture as seen in the direction of travel so that there is an ample space (on the right side of Figure 3) over a molten pool 7 which is formed on the posterior side in the travel direction. Therefore, although the surface area of the molten pool 7 is very small when seen in the feed direction of the filler wire 6 as mentioned hereinbefore, the filler wire 6 can be fed from a direction spaced away from the surface of the base metal 1, namely, in a direction approximately perpendicular to the surface of the base metal 1. If, as depicted in Figure 3, the angle of intersection of the electrode 2 and filler wire 6 is $\theta_1$ as mentioned before, the angle of forward inclination of the electrode is $\theta_2$, the angle of intersection of the filler wire 6 and surface of the welded base metal is $\theta_3$, the angle of intersection of the surface of molten pool 7 and surface of the welded base metal is $\theta_4$ and the angle between the surface of the pool 7 and the filler wire 6 is $\theta_5$, there is a limit to the reduction of the angle $\theta_1$ and, in order to increase the angle $\theta_3$ (more particularly to have $\theta_3 > \theta_4$), it is necessary to reduce the angle $\theta_2$. In this connection, one of the essential conditions of one aspect of the present invention is $\theta_2 \leq 85°$. However, when the angle $\theta_2$ is reduced, the arc tends to be directed in the axial direction of the electrode and it becomes necessary to apply a large electric current to the wire in order to perform satisfactory welding by sufficient arc deflections. The increase of current to the wire is undesirable since it will be melted by generation of higher Joule heat and detached from the molten pool, increasing the possibility of bead drooping or falls. This trouble can be prevented by increasing the feed rate of the wire but an excessive deposition rate will result in a defective joint. Therefore, it is preferred to have the relationship: $60° \leqq \theta_2 \leqq 85°$.

In a range of satisfactory vertical position welding, the angle $\theta_4$ is up to $60°$ as illustrated in Figures 9(a) to 9(c).

In a position other than vertical welding, namely, in horizontal, downhand and overhead positions, the angle $\theta_4$ becomes smaller than in the vertical position and preferably smaller than $45°$.

With regard to $\theta_3$, the relationship $\theta_3 \geqq \theta_4$ has preferably to be satisfied. If $\theta_3 < \theta_4$, the filler wire 6 fails to reach the molten pool 7 and tends to be hit or caught on the solidifying bead. As mentioned previously problems of this nature sometimes compel the interruption of the welding operation or forms bruises or depressions on the bead surface, which might lead to a defective weld. This can be avoided in all positions of welding by having $\theta_3 \geqq 60°$.

The foregoing discussions deals with the cases where the angle $\theta_4$ is maximum. The value of $\theta_4$ varies depending upon the welding conditions, including the welding position, and normally the relationship $35° \leqq \theta_4 \leqq 60°$ would apply.

The angle $\theta_1$ should not be too small since otherwise it will cause burn-back of the wire 6 or its arcing or spattering in an increased frequency due to irregularities in its feed rate, contaminating the non-consumable electrode 6 to such a degree as will make it difficult to produce a good weld. Therefore, the angle $\theta_1$ should preferably satisfy the relationship $20° \leqq \theta_1 \leqq 60°$ but it is preferred for $\theta_1$ to satisfy the relationship $35° \leqq \theta_1 \leqq 50°$. It is desirable for the angle $\theta_1$ not to be too large in order to permit a large angle for $\theta_3$. In this connection it should be mentioned that a difference from the aforementioned US Patent Specification No. 3 549 856 concerned with MIG welding is manifest in that in MIG welding it is necessary to produce a strong magnetic field by inserting the wire at an angle of $20°$—$30°$ with the axis of the arc in order to deflect the MIG arc of high stiffness. On the other hand, in TIG welding, with which the present invention is concerned, the arc has lower stiffness as compared with the MIG arc so that it can be deflected with a lower current even where $\theta_1$ is comparatively large. That is to say, sufficient arc deflection can be effected by a weaker magnetic field as compared with MIG welding. For these reasons, an angle of $45°$ can be employed for $\theta_1$ in the present invention.

If $\theta_1 = 45°$, we obtain $\theta_2 = 135° - \theta_3$ and $\theta_3 = 135° - \theta_2$ from $\theta_1 + \theta_2 = 180° - \theta_3$, and substituting $\theta_3 = 35°$ and $\theta_3 = 60°$ from $\theta_3 \geqq \theta_4$ and $35° \leqq \theta_4 \leqq 60°$, we obtain $\theta_2 \leqq 75°$ and $\theta_2 \leqq 100°$. It is disadvantageous to have $\theta_5 = 0$, so it is preferred to have $\theta_5$ at about $15°$, and thus it follows that $\theta_2 \leqq 60°$ and $\theta_2 \leqq 85°$. However, in case a small angle is employed for $\theta_2$, it becomes difficult to prevent bead drooping and falls as mentioned hereinbefore. Therefore, the relationship $60 \leqq \theta_3 \leqq 85°$ is preferred. From the foregoing the relationship $50° \leqq \theta_3 \leqq 75°$ is obtained. The photographs forming Figures 9a and 9c show vertical welds produced by following the method of the invention with various values for $\theta_4$ as indicated.

The method of the present invention is effective not only in a vertical position welding operation as exemplified but also welding operations in every position, and can find wide applications in all-position welding, horizontal solo welding, and side position solo welding and the like. Thus, it has become possible to raise the welding speed while effectively preventing magnetic blows in direct current TIG welding. However, in order to further avoid blow holes, it is recommended to employ an arc weaving method as proposed in the aforementioned Japanese Patent Application 133004/78 (Published under No. 61383/80). Although the method of the present invention employs a filler wire 6 which is supplied with electric current from a separate source to the electrode 2 in the manner mentioned hereinbefore, it is not the so-called hot wire method since the wire 6 itself is not heated. Therefore, in the event that the tip end of the filler wire 6 is detached from the molten pool 7 for some reason, there is a possibility of the filler wire 6 being continuously fed onto a solidifying bead. The arc weaving method also avoids this problem. The aforementioned Japanese application 133004/78 proposes a method which produces undulations in the intensity of the magnetic field (including reductions to zero level), without resorting to mechanical means, by conducting a pulsed current through the filler wire 6. This technique provides controlled flexibility to the TIG arc, which can be pulled back toward the filler wire 6 from a forward deflected position by weakening (or halting) the conducting current and can be deflected forward again by increasing the conducting current. It is possible for the present invention to employ this arc weaving technique substantially as it is by, supplying a pulsed current having any one of waveforms as exemplified in Figures 4(a) to 4(e) to the filler wire 6. The schematic sketches of welding conditions illustrated in Figures 4(f) and 4(g) are of a horizontal welding operation, in which the welding or travelling direction is indicated by an arrow W but the molten pool, welding bead, shielding gas cup are omitted for the simplicity of illustration. Of the wave forms shown in Figure 4(a) to 4(e), the states of corresponding arc deflection created by the waveforms shown in Figures 4(a) and 4(d) are illustrated immediately on the right of the respective waveforms. The conducting and non-conducting states are alternately repeated in each of the waveforms shown in Figures 4(a) to 4(c) but the non-conducting state in the waveform of Figure 4(c) has almost no time span. In the waveforms shown in Figure 4(d) and 4(e) which waveforms are constantly in conducting state, high and low states (Ah) and (Al) are alternately repeated to form a pulsed current. The reference character (Th) indicates a high level period and (Tl) a low (or zero) level period. It will be understood that the states of arc deflection in the respective periods can be changed by varying the amplitude of carrying current. The waveform of Figure 4(e) in which current is additionally modulated in both upper and lower periods is also useful in the present invention. Thus, the weaving width (or weaving angle) and weaving cycle can be arbitrarily adjusted by selecting suitable values for (Ah), (Al), (Th) and (Tl). The behaviours in the weaving paths at opposite values of the oscillations can also be freely adjusted by varying the value of carrying current. For example, in a case where the position of welding is changed successively to and from overhead, vertical and downhand as in circumferential butt welding of pipes, the method of the present invention has a particular advantage in that an optimum weaving pattern can be selected to cope with any sequential variations in the direction of the gravitational force acting on the molten pool.

In ordinary one-side backing welding, as soon as an abnormality such as a variation in the bevelling root gap or an irregularity or an error in the root face is met along the weld line, the amplitdue of the TIG current can be varied accordingly to control the temperature and shape of the arc as well as the size of the molten pool. The melting rate of the filler wire 6 can be controlled by synchronizing the variations in the amplitude of the TIG current with the feed rate of the filler wire 6. However, adjustment of this nature is extremely complicated and needs great skill in contrast to the above-mentioned method of this invention which can cope with the abnormalities simply by varying the amplitude of the current applied to the filler wire 6. Some specific examples in this regard are listed below.

Assume that during a one-sided backing welding operation, the thickness of the root face abruptly increases with a current pattern of Figure 4(a) and the back bead then finds it difficult to flow. To combat this, one of the following measures can be adopted.

(1) An adjustment is made to increase the amplitude of the high level current (Ah) and, the angle of forward deflection of the arc column is increased to act directly on the bevelling root surface in the foreward non-deposited metal portion. As a result, the root portion is now melted sufficiently to permit formation of the back bead.

(2) The forwardly directed period of the arc is extended to ensure sufficient penetration, by increasing the conduction time period of the filler wire 6.

(3) A combination of the foregoing measures (1) and (2).

(4) The conduction current is modified from Figure 4(a) into a pattern as shown in Figure 4(d) or 4(e).

(5) A combination of measure (2) with the measure (4).

(6) A combination of measures (4) and (5).

(7) Modified forms of the foregoing measures by additionally making fine adjustments thereto according to the condition of the workpiece.

During a welding operation which involves a bevelling of a broad gap width, it is necessary to oscillate the electrode 2 itself in a direction perpendicular to the line of travel and to oscillate the filler wire 6 to follow the movements of the electrode 2. There are no limitations in the exact pattern of oscillation but in carrying out the present invention, the arc can be deflected forward during its oscillation but control means can interrupt or weaken and intensify the deflection. Figures 5 to 8 illustrate such operations. Figure 5 shows a welding operation performed at an intersection A between a base metal 1 and a weld backing 8 as an I-bevelling. Figure 6 shows a welding operation performed at an intersection B between workpieces 1 where 8' again denotes a weld backing. Figure 7 shows a welding operation performed at intersections C between a workpiece 1 and an existing welded bead 4. Figure 8 shows a welding operation performed at an intersection D between existing welded beads 4 in addition to C, respectively. When welding is to be performed at intersections A—D depicted in Figures 5 to 8, the above-mentioned oscillation is imparted no matter whether the orientation position is downhand, vertical, horizontal or overhead. In this regard, the workpiece 1, welded bead(s) 4 and the backing 8 lying in the path of oscillation should be sufficiently preheated. It is recommended, as one of most preferred forms of the present invention, to incline the arc forwardly in a sufficient degree by increasing the current particularly at the stage where the TIG arc is directed to the intersecting portions A—D. The extent of deflection may be reduced in those regions other than the above-mentioned intersecting portions A—D and in some cases the deflection may be interrupted by cutting off the current to the filler wire 6. The welding operation can be improved by combining these control operations with the arc weaving.

Figures 10(a) and 10(b) depict in schematic form suitable means for imparting oscillation to the electrode or torch and arc extension control means (hereinafter referred to as A.V.C. — automatic arc voltage control — for brevity) performing as described. The oscillating means is built into the A.V.C. with the A.V.C. action being directed along the torch axis in the case of Figure 10a, for example, in horizontal fillet welding or sideways welding. When the electrode or torch alone is tilted as shown in Figure 10(b), the direction of the AVC action is disposed at an angle to the torch axis. The arc voltage is dropped in a case when the target of the torch is shifted toward a side plate A and the AVC action takes place in the y-direction in order to correct the voltage, lifting the torch continuously in the y-direction. Consequently, the arc tends to deviate from the welding spot and the welding operation has to be interrupted. However, this difficulty is eliminated in the case of Figure 10(a). Although both examples shown in Figures 10a and 10b show horizontal fillet welding, the same applies to the case where the torch is is tilted forwardly. This case is described hereinafter in connection with Figure 16. The desired direction of action of the arc extension control is parallel to the longitudinal axis of the arc and, in the arrangement of Figures 10a and 10b which integrally incorporates the AVC function, the oscillating means itself is required to be tilted in parallel relation with the electrode axis.

Figures 11 to 15 depict in greater detail a preferred form of mechanism forming the oscillating means for apparatus constructed in accordance with the invention. Referring to Figures 11 to 15, the oscillating mechanism has a drive casing 101 and a movable casing 102. The drive casing 101 is mounted on a welding carriage or a welding head. The movable casing 102 is mounted in the fore ends of slide shafts 103 and 103a which project from and are slidable into and out from the drive casing 101. A pair of slide shafts 105 and 105a are also mounted within the movable casing 102 perpendicularly to the first mentioned slide shafts 103 and 103a. A slide member 106 is slidably fitted on the slide shaft 105 and 105a in a bridging manner. The member 106 carries a holder 104 which supports thereon the electrode or torch. The slide member 106 is moved along the shafts 105, 105a by rotation of a pinion 115 which is meshed with a rack member 109 on the slide member 106 and driven by a lifting motor 108 provided within the drive casing 101. The movable casing 102 is moved by the slide shafts 103 and 103a toward and away from the drive casing 101, and the pinion 115 is connected to the motor 108 though a telescopically splined connecting shaft. This arrangement is shown more particularly in Figure 13. As shown in Figure 13(a) splined shaft assembly 110 which couples the motor 108 to the pinion 115 includes a splined bearing 111 which is loosely fitted in a support wall of the casing 101. An output shaft 112 of the motor 108 is fitted in one end portion of the splined bearing 111, and a spined shaft 113 is fitted into the other end portion of the bearing 111. The pinion 115 is securely fixed to the outer end of the shaft 113 by means of a spigot 114 fitting in the shaft 113. A dustproof bellows 116 surrounds the shaft 113.

The slide shafts 103 and 103a are moved in reciprocal manner by a weaving motor 107 also located in the casing 101. The distance of the reciprocal movement of the shafts 103, 103a is adjustable from outside the drive casing 101 to obtain movements of a constant speed over a desired distance. More particularly, the slide shafts 103 and 103a are loosely fitted in respective boss members 101b within the casing 101. The slide shafts 103, 103a are connected to each other within the casing 101 by a link member 120 which is fitted on the inner end portions of the slide shafts 103, 103a. The slide shaft 103a is driven by the slide shaft 103 through the link member 120, while the slide shaft 103 is in turn driven by means of a rack 121 which is formed on one part thereof. Therefore, the slide shaft 103 is longer than the shaft 103a and has its inner end extended beyond the link member 120. The extended part of the slide shaft 103 is formed with teeth constituting the rack 121. It is however possible to attach a separately formed rack to the slide shaft 103, if desired. A pinion 119 which meshes with the rack 121 is securely mounted on one end of a drive shaft 118a which is loosely fitted in a fixed bracket 117 provided in the drive casing 101. The drive shaft 118a is rotated by a miter gear 118 which is driven in alternate directions by the weaving motor 107 directly or more preferably through a clutch 117a. The reciprocal movement imparted to the shafts 103, 103a is controlled by varying the duration of alternate rotation of the gear 118. This can be accomplished by switching the motor drive power source or by actuating the clutch 117a. A control mechanism suitable for this purpose is depicted in Figures 13 to 15. As shown, a fixed support arm 124 is provided in the drive casing 101 in alignment with the locus of movement of the link member 120. The support arm 124 has limit switches 122 and 123 mounted on the opposite sides thereof. A support block 128 is attached to the link member 120 and located immediately beneath the support arm 124. The block 128 is provided with a couple of strikers 125 and 126 slidable in relation to the block 128 to aligned positions. As shown particularly in Figure 14, the support block 128 is provided with a groove of a re-entrant or dovetail shape, slidably receiving foot portions on the bottom sides of the strikers 125 and 126. Alternatively, the support seat 128 may have several slide shafts or some other suitable slide mechanism for mounting the strikers 125, 126. The strikers 125, 126 are provided with screw-threaded holes for threaded engagement with a screw-threaded rod 127. As shown in Figure 15, the rod 127 has screw-threaded portions of reverse directions substantially on opposite sides of its median point. Therefore, the strikers 125 and 126 are moved toward each other by rotating the screw rod 127 in one direction and away from each other by rotating the screw rod 127 in the other direction. As also shown in Figure 15, the screw rod 127 has one end (the left end in the figure) loosely fitted to the link member 120 in such a manner as to permit the screw rod 127 to move with the link member 120 in a direction parallel to the reciprocal movement of the shafts 103, 103a while permitting the free rotation of the screw rod 127. Therefore, the strikers 125 and 126 as well as the screw rod 127 are moved with the slide shafts 103, 103a over a distance corresponding to the oscillation. The other end of the screw rod 127 is journalled in a wall of the drive casing 101 through a splined joint as shown in Figure 13. As shown in Figure 13, a splined sleeve 130 is rotatably supported in a journal recess formed in the associated wall 135 of the drive casing 101. The sleeve 130 receives a splined shaft 129 in such a manner as to transmit torque thereto while, permitting free axial movement the splined shaft 129. The other outer end of the screw rod 127, remote from the link member 120, is connected to the splined shaft 129. Thus, the oscillation of the shafts 103, 103a causes sliding movements of the splined shaft 129 within the splined sleeve 130. Unless the sleeve 130 is rotated, the strikers 135 and 126 are maintained in a predetermined spaced position.

The top faces of the strikers 125 and 126 are engageable with the limit switches 122 and 123. As shown in Figure 15, microswitches are employed as the limit switches 122, 123 in the particular embodiment shown and the microswitches have respective operating elements 123a and 122a capable of contacting engagement with the top surfaces of the strikers 126 and 125, respectively. The switches 122 and 123 are arranged to operate a rotation control switch of the motor 107 or switching means for the clutch 117a, which is then electromagnetic. As shown in Figure 12 a socket 134 serves to connect the apparatus to a suitable electrical power source. If the link member 120 is moved, for example, to the left of Figure 15, the end portion 126a of the striker 126 reaches and actuate the switch 123 to reverse the drive direction as mentioned hereinbefore and at the same time puts the switch 122 in a sensitive state. As a result, the movement is reversed and continues until the end portion 125a of the striker 125 actuates the switch 122 to again reverse the direction of movement in the same manner. In this particular embodiment, the distance between the operating ends 125a and 126a of the strikers 125 and 126 corresponds to the distance of oscillation but this distance can be readily adjusted by turning the screw rod 127. To accomplish this the splined sleeve 130 is partly rotated.

A gear 131 which is fixed on the outer periphery of the splined sleeve 130 engages with a gear 132 which is rotatably supported on the wall 135. Part of the gear 132 projects out of the drive casing 101 so that the gears 131, 132 and hence the sleeve 130 and the shaft 129 can be manually rotated from outside to displace the rod 127 and adjust the strikers 125, 126. As shown in Figure 11, an indicator plate 133 signifies the rotational angles of the gear 132 as indicated representing oscillation distances. The oscillating mechanism as described moves the slide shaft 103, 103a with the aid of the rack and pinion 119, 121 so that a constant speed can always be maintained irrespective of alterations in the oscillation distance to permit welding under optimum conditions. In addition, the apparatus is compact, easy to handle and capable of ensuring stable operations over a long period of time.

Figure 16, shows a welding apparatus employing the oscillating mechanism as described which is designated by reference 204. The filler wire 6 and an associated motor drive rotatable wire feeder 201 are located forward of the torch as seen in the direction of travel. This is because, when there is a steel plate or some other obstacle at a starting point as in Figure 10(a), a filler wire and a wire feeder located on the rear side of the electrode contrary to Figure 16 would have difficulty in reaching the starting point and have to leave a long unwelded portion at that point. Therefore, the filler wire 6 and wire feeder 201 are preferred to be located as shown in Figure 16. The wire feeder 201 is rotatable as indicated by arrows of broken line and a flexible tube 202 covers the wire 6. In a case where the wire carries electric current, it is fed toward the molten pool around the rear side of the electrode. However, in ordinary TIG welding using a dead filler wire, it can be fed from the front side. It is possible to complete the welding operation up to the final layer by raising the deposition rate with use of a current-carrying filler wire 6. However, excess metal is increased due to a high melting rate as compared with ordinary TIG welding. This is the main reason why ordinary TIG welding is preferred. The metal deposition up to the penultimate layer depends on the bevelling angle, root gap and dislocation. Since variations occur in the dimension I of Figure 17 depending upon these factors, the deposition rate is adjusted before finishing the final layer. However, the reduction of feed rate of a current-carrying filler wire is limited as the control of electric current becomes meaningless and the bead is disturbed if the wire falls short of the molten pool. Further, the bead appearance is deteriorated when a dead wire is fed from the rear side as compared with a case where it is fed from the front side. As clear from the foregoing description, the apparatus of the present invention permits ordinary TIG welding as well.

In this instance, a problem can arise in that the flexible tube 202 which covers the filler wire 6 between the motor-driven wire feeder 201 and the torch portion 203, and normally guides the wire 6 around the rear side of the torch portion 203, becomes unwieldy when it is used for feeding the wire 6 to the front side of the torch. Since the wire feeder 201 is rotatable in either of the directions indicated by broken lines in Figure 16, this problem is mitigated and the same flexible tube 202 can serve for both front and rear feeds.

In order to tilt the torch portion 203 forwardly, a joint 205 supporting the oscillating mechanism 204 is angularly adjusted in the arrowed directions.

It will be appreciated from the foregoing description that, according to the direct current TIG welding method and apparatus of the present invention, high-efficiency and sound welding becomes possible in all positions. The present invention is not limited by the foregoing particular embodiments however and permits various alterations and modifications in the shape of component parts or in the manner of carrying out the described method within the scope as encompassed by the appended claims.

## Claims

1. A welding method in which a gas-shielded non-consumable electrode (2) and a filler wire (6) are respectively connected to independent DC power sources and the non-consumable electrode (2) is located in a position forward of the filler wire (6) relative to the direction of progress of welding, said non-consumable electrode (2) and the filler wire (6) respectively carrying electric currents flowing in opposite directions with respect to the workpiece, characterised in that said non-consumable electrode (2) is held in a forwardly tilted position forming an angle $(\theta_2) \leq 85°$ with a workpiece (1).

2. A welding method according to claim 1, characterised in that an angle $(\theta_1)$ of 20°—60° is established between said non-consumable electrode (2) and the filler wire (6), an angle $(\theta_2)$ of 60°—85° is established between said non-consumable electrode (2) and workpiece (1), and an angle $(\theta_3)$ of 50°—75° is established between said filler wire (6) and the workpiece (1).

3. A welding method according to claim 1, characterised in that the operation takes place in a vertical disposition, and an angle $(\theta_5)$ of not less than about 15° is established between the surface of the resultant molten pool and filler wire (6).

4. A welding method according to any one of claims 1 to 3, characterised in that a pulsating current is supplied to the filler wire (6) for controlling, i.e. weaving, the arc (3) produced along a line lying in the direction of progress.

5. A welding method according to claim 4, characterised in that the pulsating current supplied to the filler wire (6) consists of alternate conducting and non-conducting periods.

6. A welding method according to claim 4, characterised in that the pulsating current supplied to the filler wire (6) consists of alternate periods of relatively large and small amplitudes.

7. A welding method according to any one of claims 1 to 6, characterised in that the non-consumable electrode (2) and the filler wire (6) are oscillated in a direction perpendicular to the welding direction.

8. A welding method according to claim 7, characterised in that the amplitude of the electric current supplied to the filler wire (6) is variably controlled.

9. A welding method according to claim 8, characterised in that the amplitude of the electric current supplied to the filler wire (6) is increased when the target of welding is sighted at an intersection (B) of workpieces (1), an intersection (D) of previously deposited metal portions (4), an intersection (C) of a workpiece (1) and a previously deposited metal portion (4), or an intersection (A) of a workpiece (1) and a weld backing (8).

10. A welding apparatus with an oscillating mechanism for the welding torch; said mechanism including a movable casing (102) having means (104) for holding a welding torch and movable reciprocally in a direction perpendicular to the axis of said welding torch, and a drive casing (101) accommodating a drive mechanism and supporting said movable casing at a projected end of a slide shaft (103) for movements toward and away from said drive casing, said means (104) for holding said welding torch being mounted on a slide member (106) loosely fitted on slide shafts (105, 105a) extending in the axial direction of said welding torch, and said slide member (106) being driven by a driven shaft assembly (110) telescopically linked to the drive mechanism of said drive casing (101), characterised in that: said slide shaft (103) is moved by a rack and pinion (121, 119), limit switches (122, 123) are fixedly mounted in said drive casing and serve to control the direction of rotation of said pinion (119) thereby to limit the range of sliding movements of said slide shaft (103), strikers (125, 126) are supported on a screw rod (127) in operative engagement with inverse screw threaded portions thereof and are movable during oscillation to operate said limit switches (122, 123), said screw rod (127) being adjustable from outside the casing (101) via a splined joint (129, 130) provided in the casing (101) to vary the stroke of the oscillating motion.

11. Apparatus according to claim 10, characterised by a rotatable filler wire feeder (201) located forward of said welding torch for feeding said filler wire to a welding spot around the rear side of said torch and through a flexible conduit (202).

## Revendications

1. Procédé de soudage à l'arc au moyen d'une électrode non consommable (2) employée sous gaz inerte avec un fil de métal d'apport (6), l'électrode et le fil étant respectivement reliés à des sources indépendantes de courant électronique continu; l'électrode non consommable (2) étant disposée sur l'avant du fil de métal d'apport (6), par rapport au sens d'avance du soudage; l'électrode non consommable (2) et le fil de métal d'apport (6) assurant respectivement le passage de courants électriques qui ont des sens opposés par rapport à la pièce à souder; le procédé étant caractérisé en ce qu'on maintient l'électrode non consommable (2) dans une position inclinée vers l'avant, avec un angle d'inclinaison ($\theta$2) inférieur ou égal à 85°, par rapport à la pièce à souder (1).

2. Procédé selon la revendication 1, caractérisé en ce qu'on opère en disposant l'électrode non consommable (2) et le fil de métal d'apport (6) de manière à avoir un angle ($\theta$1) de 20 à 60° entre l'électrode non consommable (2) et le fil de métal d'apport (6); à avoir un angle d'inclinaison ($\theta$2) de 60 à 85° entre l'électrode non consommable (2) et le pièce à souder (1); et à avoir un angle d'inclinaison ($\theta$3) de 50 à 75° entre le fil de métal d'apport (6) et la pièce à souder (1).

3. Procédé selon la revendication 1, caractérisé en ce qu'on opère en disposition verticale, avec un angle d'inclinaison ($\theta$5) d'au moins 15° entre la surface du bain fondu de soudage et le fil de métal d'apport (6).

4. Procédé selon l'une des revendications 1 à 3, caractérisé en ce qu'on alimente le fil de métal d'apport (6) en courant pulsé, pour commander une oscillation de la position de l'arc de soudage (3) dans le sens d'avance du soudage.

5. Procédé selon la revendication 4, caractérisé en ce que le mode d'alimentation en courant électrique pulsatoire du fil de métal d'apport (6) comporte alternativement des périodes de passage de courant et des périodes sans courant.

6. Procédé selon la revendication 4, caractérisé en ce que le mode d'alimentation en courant électrique pulsatoire du fil de métal d'apport (6) comporte alternativement des périodes d'intensité relativement forte, et des périodes de faible intensité.

7. Procédé selon l'une des revendications 1 à 6, caractérisé en ce qu'on soumet à un mouvement oscillant l'électrode non consommable (2) et le fil de métal d'apport, dans une direction perpendiculaire au sens du soudage.

8. Procédé selon la revendication 7, caractérisé en ce qu'on fait varier l'intensité du courant électrique d'alimentation du fil de métal d'apport (6).

9. Procédé selon la revendication 8, caractérisé en ce qu'on augmente l'intensité du courant électrique d'alimentation du fil de métal d'apport (6) lorsque le cordon de soudage à réaliser doit passer: à l'endroit d'une intersection (B) de pièces à souder (1), à l'endroit d'une intersection (D) de cordons de soudage (4) précédemment déposés, à l'endroit d'une intersection (C) d'une pièce à souder et d'un cordon de soudage (4) précédemment déposé, ou à l'endroit d'une intersection (A) d'une pièce à souder (1) et d'une plaque de fond auxiliaire (8).

10. Dispositif de soudage à l'arc, à mécanisme oscillant pour commander les mouvements d'une torche de soudage; ce mécanisme comportant un boîtier mobile (102), qui porte une monture (104) pour maintenir la torche de soudage et communiquer à celle-ci un mouvement alternatif suivant une direction perpendiculaire à l'axe de la torche; et un boîtier d'entraînement (101), qui contient un système d'entraînement, et soutient le boîtier mobile (102) par une extrémité en saillie d'un arbre coulissant (103) animé d'un mouvement alternatif par rapport au boîtier d'entraînement (101); la monture (104) prévue pour recevoir la torche de soudage étant portée par un coulisseau (106), monté avec du jeu sur deux tiges de coulissement (105, 105a) disposées dans la direction axiale de ladite torche de soudage; et le coulisseau (106) étant entraîné par un système d'arbre d'entraînement (110), relié télescopiquement au système d'entraînement du boîtier d'entraînement (101); le dispositif étant caractérisé en ce que l'arbre coulissant (103) est commandé par un pignon (119) associée à une crémaillère (121); des contacteurs de bout de course (122, 123), montés à poste fixe dans le boîtier d'entraînement (101), étant prévus pour commander le sens de rotation du pignon (119), afin de limiter la course du coulissement alternatif de l'arbre coulissant (103); des butées d'actionnement (125, 126) étant montées respectivement sur deux parties à filetages inverses d'une tige filetée (127), et pouvant se déplacer suivant les mouvements du mécanisme oscillant, pour faire fonctionner les contacteurs de bout de course (122, 123); et la tige filetée (127) étant réglable de l'extérieur du boîtier (101) grâce à un embout cannelé (129) associé à une bague de réglage (130) solidaire du boîtier (101), pour faire varier la course du mouvement oscillant.

11. Dispositif selon la revendication 10, caractérisé en ce qu'il comporte un système rotatif (201) pour assurer l'alimentation en fil de métal d'apport (6); ce système rotatif d'alimentation (201) étant disposé sur l'avant de la torche de soudage, avec un agencement qui permet de faire passer le fil de métal d'apport (6) autour de l'électrode de soudage (2) par l'arrière de celle-ci, pour faire arriver le fil de métal d'apport sur la zone de soudage, en faisant passer le fil dans un conduit souple (202).

**Patentansprüche**

1. Schutzgasschweißverfahren, bei dem eine nichtverbrauchende Elektrode (2) und ein Schweißdraht (6) jeweils mit unabhängigen Gleichstromquellen verbunden sind und die nicht verbrauchende Elektrode (2) relativ zur Schweißrichtung an einer Stelle vor dem Schweißdraht (6) angeordnet ist, wobei die nichtverbrauchende Elektrode (2) und der Schweißdraht (6) elektrischen Strömen unterliegen, die bezüglich des Werkstücks in entgegengesetzten Richtungen fließen, dadurch gekennzeichnet, daß die nichtverbrauchende Elektrode (2) unter einem Winkel $(\theta_2) \leq 85°$ zum Werkstück (1) in einer nach vorne geneigten Stellung gehalten ist.

2. Schweißverfahren nach Anspruch 1, dadurch gekennzeichnet, daß ein Winkel $(\theta_1)$ von 20° bis 60° zwischen der nichtverbrauchenden Elektrode (2) und dem Schweißdraht (6) eingehalten ist, daß ein Winkel $(\theta_2)$ von 60° bis 85° zwischen der nichtverbrauchenden Elektrode (2) und dem Werkstück (1) eingehalten ist, und daß ein Winkel $(\theta_3)$ von 50° bis 75° zwischen dem Schweißdraht (6) und dem Werkstück (1) eingehalten ist.

3. Schweißverfahren nach Anspruch 1, dadurch gekennzeichnet, daß das Schweißen vertikal erfolgt, und daß ein Winkel $(\theta_5)$, der nicht kleiner als ca. 15° ist, zwischen der Fläche des sich ergebenden geschmolzenen Schweißauges und dem Schweißdraht (6) aufrechterhalten ist.

4. Schweißverfahren nach einem der Ansprüche 1 bis 3, dadurch gekennzeichnet, daß zur Steuerung, d.h. zur pendelnden Ablenkung, des Schweißbogens (3), der entlang einer in der Schweißrichtung liegenden Linie erzeugt wird, ein Impulsstrom durch den Schweißdraht (6) geschickt wird.

5. Schweißverfahren nach Anspruch 4, dadurch gekennzeichnet, daß der durch den Schweißdraht (6) geschickte Impulsstrom abwechselnd aus leitenden und nichtleitenden Perioden besteht.

6. Schweißverfahren nach Anspruch 4, dadurch gekennzeichnet, daß der durch den Schweißdraht (6) geschickte Impulsstrom aus wechselnden Perioden von relativ großen und kleinen Amplituden besteht.

7. Schweißverfahren nach einem der vorangehenden Ansprüche, dadurch gekennzeichnet, daß die nichtverbrauchende Elektrode (2) und der Schweißdraht (6) in einer zur Schweißrichtung senkrechten Richtung oszillierend hin und herbewegt werden.

8. Schweißverfahren nach Anspruch 7, dadurch gekennzeichnet, daß die Amplitude des durch den Schweißdraht (6) geschickten elektrischen Stroms variabel steuerbar ist.

9. Schweißverfahren nach Anspruch 8, dadurch gekennzeichnet, daß die Amplitude des durch den Schweißdraht (6) geschickten elektrischen Stroms erhöht wird, wenn der Schweißort an einem Schnittbereich (B) von Werkstücken (1), an einem Schnittbereich (D) von zuvor abgelagerten Metallbereichen (4), an einem Schnittbereich (C) zwischen einem Werkstück (1) und einem zuvor abgelagerten Metallbereich (4), oder an einem Schnittbereich (A) von einem Werkstück (1) und einer Schweißunterlage (8) in die Nähe rückt.

10. Schweißvorrichtung mit einem Oszillationsmechanismus für den Schweißbrenner, wobei der Mechanismus ein bewegliches Gehäuse (102) mit einer Einrichtung (104) zur Halterung eines Schweißbrenners, das in einer zur Achse des Schweißbrenners senkrechten Richtung hin und herbeweglich ist, sowie ein Antriebsgehäuse (101) umfaßt, das einen Antriebsmechanismus aufnimmt und das bewegliche Gehäuse für Bewegungen auf das Antriebsgehäuse zu und von diesem weg an einem vorstehenden Ende einer Gleitachse (103) trägt, wobei die Einrichtung (104) zur Halterung des Schweißbrenners an einem Gleitelement (106) angebracht ist, das lose auf sich in Axialrichtung des Schweißbrenners erstreckende Gleitachsen (105, 105a) gepaßt ist und das durch eine teleskopisch mit dem Antriebsmechanismus des Antriebsgehäuses (101) verbundene Antriebswelleneinheit (110) angetrieben wird, dadurch gekennzeichnet, daß die Gleitachse (103) durch eine Zahnstange mit Ritzel (121, 119) bewegt wird, daß Begrenzungsschalter (122, 123) fest in dem Antriebgehäuse montiert sind und zur Steuerung der Drehrichtung des Ritzels (119) dienen, um dadurch den Bereich der Gleitbewegungen der Gleitachse (103) zu begrenzen, daß Mitnehmer (125, 126) auf einer Gewindestange (127) in Wirkeingriff mit deren inversen Schraubgewindeabschnitten getragen und während der Hin- und Herbewegung zur Betätigung der Begrenzungsschalter (122, 123) beweglich sind, und daß die Gewindestange (127) von der Außenseite des Gehäuses (101) her über ein mit Keilnuten versehenes Verbindungsstück (129, 130), das in dem Gehäuse (101) vorgesehen ist, zur Veränderung des Hubs der hin- und hergehenden Bewegung, einstellbar ist.

11. Vorrichtung nach Anspruch 10, gekennzeichnet durch eine drehbare Schweißdrahtzuführeinrichtung (201), die zur Zuführung des Schweißdrahtes durch einen flexiblen Schlauch (202) zu einem Schweißpunkt um die Rückseite des Schweißbrenners herum vor diesem angeordnet ist.

# F I G. 1

# F I G. 2

**0 062 124**

# F I G. 3

# F I G. 4(a)

# F I G. 4(b)

# F I G.4(c)

# F I G.4(d)

# F I G.4(e)

# F I G.4(f)

# F I G.4(g)

4

F I G. 5

F I G. 6

F I G. 7

F I G. 8

F I G. 9(c)

$\theta_4 = 60$

F I G. 9(b)

$\theta_4 = 45$

F I G. 9(a)

$\theta_4 = 35$

6

# F I G.10 (a)

# F I G.10 (b)

F I G.11

0 062 124

F I G.12

# F I G . 13

# F I G . 14

# F I G . 15

# F I G.16

204

205

201    202

6

202

203

201  202

6

204

205

202

206

203

# F I G. 17

ℓ